# EUROPEAN PATENT APPLICATION

(11) **EP 4 597 051 A1**
(43) Date of publication of application: **06.08.2025**
(21) Application number: 23888482.9
(22) Date of filing: 23.10.2023
(51) Int. Cl.: G01F 23/2962, G01F 23/2965, H04R 1/44, H04R 17/00

(54) **ULTRASONIC LIQUID LEVEL SENSOR PROBE**

(30) Priority: 10.11.2022 JP 2022180620; 19.04.2023 JP 2023068717
(71) Applicant: Kouraku Co., Ltd., Chiyoda-ku, Tokyo 101-0021 (JP)
(72) Inventor: KATAOKA, Mitsuhiro, Iwanuma-shi, Miyagi 989-2433 (JP); SHIRATA, Masaki, Sendai-shi, Miyagi 982-0251 (JP); TAMURA, Mitsuo, Shibata-gun, Miyagi 989-1622 (JP); YOSHIDA, Tetsuo, Sendai-shi, Miyagi 984-0838 (JP)
(74) Representative: Marks & Clerk LLP
(86) International application number: PCT/JP2023/038199
(87) International publication number: WO 2024/101132

(57) **Abstract**

Provided is an ultrasonic liquid level sensor probe using a piezoelectric plate FPC module which has a simple configuration, is small and easy to handle, requires no wiring of lead wires, and is easily assembled into a probe. For the piezoelectric plate FPC module, there are a single-sided arrangement, in which an FPC is bonded to one-side surfaces of two or more piezoelectric plates, and a double-sided arrangement, in which two or more piezoelectric plates are sandwiched between two FPCs that are an FPC for individual electrodes and an FPC for a common electrode. The ultrasonic liquid level sensor probe has the piezoelectric plate FPC module stored in a double pipe serving as an insertion portion of the ultrasonic liquid level sensor probe.

## Description

### Technical Field

The present invention relates to an ultrasonic liquid level sensor probe to be used for detecting a level of a liquid (liquid level).

### Background Art

There are various types of ultrasonic liquid level sensor probes that are inserted into a liquid to detect a liquid level (for example, Patent Literatures 1 to 5). Any one of the ultrasonic liquid level sensor probes has an ultrasonic wave transmission-and-reception system built into a pipe (usually a double pipe) of an insertion portion that is inserted into the liquid.

An ultrasonic wave transmission-and-reception system includes a piezoelectric plate (ultrasonic oscillator). The piezoelectric plate can be used for a wave transmission purpose capable of transmitting ultrasonic waves, or can be used for a wave reception purpose capable of receiving ultrasonic waves. There is also a dual-purpose wave transmitting-and-receiving piezoelectric plate that can be used alone for both a wave transmission purpose and a wave reception purpose. Any piezoelectric plate has a plate shape such as a rectangular plate or a circular plate, has electrodes formed over almost whole areas of opposed surfaces in a thickness direction, and is polarized in the thickness direction.

The ultrasonic wave transmission-and-reception system is adapted to be capable of generating ultrasonic waves by applying an AC voltage (drive voltage) between counter electrodes of a piezoelectric plate for a wave transmission purpose, transmitting the ultrasonic waves from a surface of an elastic plate to which the piezoelectric plate is bonded and fixed, receiving the ultrasonic waves that have propagated through the liquid on a surface of an elastic plate to which a piezoelectric plate for a wave reception purpose is bonded and fixed, and outputting the ultrasonic waves as an electrical signal from the piezoelectric plate.

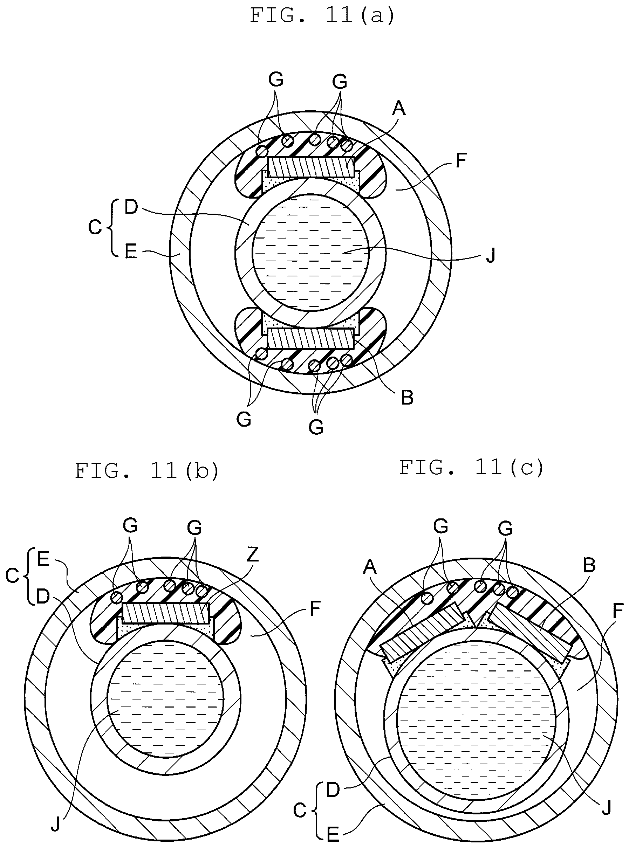

There are ultrasonic wave transmission-and-reception systems having various forms, for example, those illustrated in FIG. 11(a) and FIG. 11(b). The ultrasonic wave transmission-and-reception system of FIG. 11(a) is of an opposed arrangement type in which a piezoelectric plate (wave transmitter) A for a wave transmission purpose and a piezoelectric plate (wave receiver) B for a wave reception purpose are bonded to an outer peripheral surface of an inner pipe D of a pipe (double pipe formed of the inner pipe D and an outer pipe E) C of an insertion portion of the ultrasonic liquid level sensor probe and are arranged so as to be opposed to each other.

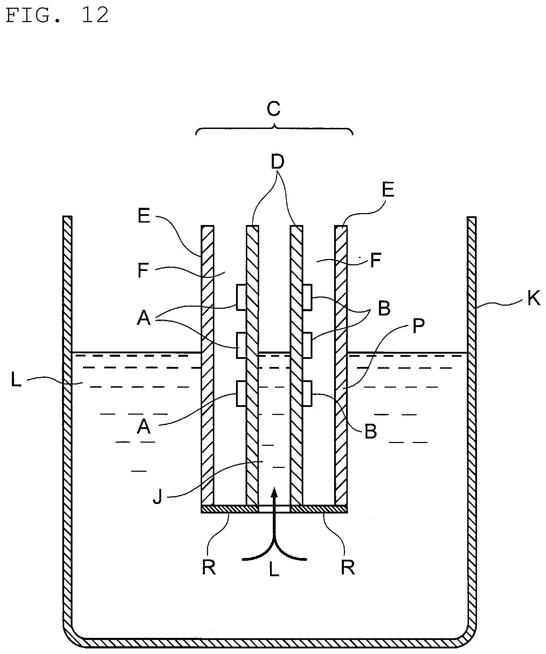

As in FIG. 12, two or more wave transmitters A and wave receivers B of FIG. 11(a) are bonded to the inner pipe D at intervals in a vertical direction thereof. The wave transmitters A and the wave receivers B are connected to lead wires G (FIG. 11(a)) that are wired in a space (arrangement space) F between the inner pipe D and the outer pipe E. A bottom surface of the arrangement space F is closed by a bottom plate R (FIG. 12) so as to prevent entry of a liquid, and the wave transmitters A and the wave receivers B in the arrangement space F are isolated and protected from the liquid. Wiring the lead wires G and closing the bottom surface of the arrangement space F to isolate and protect the electrodes of the piezoelectric plate from a liquid L are the same for the ultrasonic wave transmission-and-reception system of FIG. 11(b) described next.

The ultrasonic wave transmission-and-reception system of FIG. 11(b) is of a reflective type in which a dual-purpose wave transmitting-and-receiving piezoelectric plate (wave transmitter-receiver) Z is bonded and fixed to the outer peripheral surface of the inner pipe D of the double pipe C, and the ultrasonic waves emitted from the wave transmitter-receiver Z enter a space (entry space) J in the inner pipe D, propagate through the rising liquid L, and are reflected by an opposed inner wall (reflector) of the inner pipe D, and the ultrasonic waves that have been reflected (reflected ultrasonic waves) are received by the wave transmitter-receiver Z. Two or more wave transmitter-receivers Z are bonded to the inner pipe D at intervals in the vertical direction thereof.

The ultrasonic wave transmission-and-reception system of FIG. 11(c) is of a reflective type in which the wave transmitter A and the wave receiver B are separate, arranged side by side, and bonded and fixed to the outer peripheral surface of the inner pipe D. The ultrasonic wave transmission-and-reception system of FIG. 11(c) is also of a separate arrangement type in that the wave transmitter A and the wave receiver B are separately arranged. In this case, the ultrasonic waves emitted from the wave transmitter A are reflected by the opposed inner wall of the inner pipe D, and the ultrasonic waves that have been reflected (reflected ultrasonic waves) are received by the wave receiver B. Two or more wave transmitters A and wave receivers B are also bonded and fixed to the inner pipe D at intervals in the vertical direction thereof as in FIG. 12.

As in FIG. 12, when the insertion portion (probe) P of the ultrasonic liquid level sensor probe is inserted into the liquid L in the container K, the liquid L in the container K enters the entry space J of the inner pipe D. Under this state, when a drive voltage is applied to the wave transmitter A built into the double pipe C to emit ultrasonic waves, the ultrasonic waves propagate through the liquid L in the entry space J to be received by the wave receiver B. A time period (propagation time period) until waves are received or an intensity (propagation intensity) of the received ultrasonic waves differs depending on both presence or absence of the liquid L in the entry space J and a height of a water surface. In addition, a time period (reflection time period) until the ultrasonic waves propagating through the liquid L in the entry space J are reflected by the inner wall of the inner pipe D and received by the wave receiver B or an intensity (reflection intensity) of reflected waves of the ultrasonic waves propagating through the liquid L to be repeatedly reflected by the inner wall of the inner pipe D differs depending on the presence or absence of the liquid L in the entry space J. Through detection of a length of the propagation time period, a strength of the propagation intensity, a length of the reflection time period, a strength of the reflection intensity, or the like, it is possible to detect the presence or absence of the liquid L in the entry space J. It is also possible to detect a liquid surface position (liquid level) of the liquid L in the entry space J by detecting whether the propagation time period is short or long or whether the propagation intensity is strong or weak when a voltage is applied to which wave transmitter A among the two or more wave transmitters A bonded at intervals in the vertical direction. Further, the ultrasonic waves propagating through the liquid L are repeatedly reflected by the inner wall of the inner pipe D, and hence it is possible to detect the presence or absence of the liquid L in the entry space J from the attenuation state of a reception signal of the reflected waves.

In a case of the double pipe C, the arrangement space F (FIG. 11(a) and FIG. 11(b)) between the inner pipe D and the outer pipe E is narrow, and hence it is difficult to arrange the wave transmitter A and the wave receiver B. There are also troubles and difficulties in assembling, for example, it is difficult to wire the lead wires G and route the lead wires G. When the inner pipe D and the outer pipe E are circular pipes, wall surfaces thereof are curved, and hence it is particularly troublesome and difficult. Further, when the inner pipe D is a circular pipe, bonding positions, bonding directions, and the like of the wave transmitter A and the wave receiver B are liable to vary, and hence wave transmission-and-reception sensitivity of the ultrasonic liquid level sensor probe is liable to vary, thereby leading to poor liquid level detection accuracy.

In an ultrasonic liquid level sensor probe of Patent Literature 5, a wave transmitter and a wave receiver are attached to a printed circuit board (pcb; elastic plate), and hence it is not required to provide a space for wiring the lead wires G in a space between an inner pipe and an outer pipe (corresponding to F of FIG. 11(a) and FIG. 11(b)). It is also not required to wire or route the lead wires G. However, the pcb of Patent Literature 5 has a sturdy (rigid) plate shape, and hence in order to arrange the pcb in a space of a double pipe molded into a predetermined shape and size, which has a limited shape and area, there are troubles and drawbacks similar to those in the above-mentioned case of storage and arrangement in the double pipe. There are also constraints that the shape and size are required to match the shape and area of the space. Further, the pcb is thick, and hence it is difficult to reduce the ultrasonic liquid level sensor probe in thickness and size.

### Citation List

### Patent Literature

[PTL 1] JP 2014-224818 A
[PTL 2] JP 56-130616 A
[PTL 3] JP 57-013320 A
[PTL 4] JP 7-181072 A
[PTL 5] JP 7-502339 A

### Summary of Invention

### Technical Problem

The problem to be solved by the present invention is to provide an ultrasonic liquid level sensor probe using a piezoelectric plate FPC module in which a plurality of piezoelectric plates can be collectively bonded and fixed to bonding locations inside a pipe of an insertion portion of the ultrasonic liquid level sensor probe so as to all face a predetermined direction and it is not required to wire lead wires and also not required to route the lead wires.

### Solution to Problem

### (Description of Terminology)

Prior to the description of the present invention, among various terms used in the description of the present invention, the following terms are described: a piezoelectric plate, a positive electrode surface of the piezoelectric plate, a negative electrode surface of the piezoelectric plate, a positive electrode of the piezoelectric plate, a negative electrode of the piezoelectric plate, a positive extraction electrode of the piezoelectric plate, a negative extraction electrode of the piezoelectric plate, a flexible printed circuit (FPC), a bonding surface of the FPC, and an outer surface of the FPC. Those terms are the same in the Description of Embodiments and Claims sections.

### [Piezoelectric Plate]

The piezoelectric plate is a plate having each of various shapes, such as a square plate or a circular plate, and has opposed surfaces in a thickness direction one of which is a positive electrode surface and the other of which is a negative electrode surface. This is the same as a general-purpose one.

### [Positive Electrode Surface and Negative Electrode Surface]

The positive electrode surface and the negative electrode surface of the piezoelectric plate are expressed by a polarity of a voltage applied when the piezoelectric plate is polarized, with the positive electrode surface being an electrode surface to which a positive voltage has been applied and the negative electrode surface being an electrode surface to which a negative voltage has been applied. Those are the same as general-purpose ones.

### [Positive Electrode and Negative Electrode]

The positive electrode of the piezoelectric plate is an electrode provided to the positive electrode surface, and the negative electrode of the piezoelectric plate is an electrode provided to the negative electrode surface. Those are the same as general-purpose ones.

### [Positive Extraction Electrode and Negative Extraction Electrode]

The positive extraction electrode of the piezoelectric plate is an electrode extracted from the positive electrode of the piezoelectric plate to one of opposed side surfaces of the piezoelectric plate, and the negative extraction electrode of the piezoelectric plate is an electrode extracted from the negative electrode of the piezoelectric plate to a side surface on the opposite side to the above-mentioned side surface. The counter electrodes (positive electrode, negative electrode, positive extraction electrode, and negative extraction electrode) of the piezoelectric plate are generally formed by baking silver paste.

### [FPC, Bonding Surface, and Outer Surface]

The FPC has a flexible film shape, and has a one-side surface being the bonding surface for bonding the piezoelectric plate and a surface on the opposite side thereto being the outer surface. In the same manner as in a general-purpose FPC, the bonding surface and the outer surface each have a wiring pattern required in the present invention formed thereon.

### [Piezoelectric Plate FPC Module]

A piezoelectric plate FPC module built into a pipe of an insertion portion of an ultrasonic liquid level sensor probe according to the present invention is a device in which a plurality of piezoelectric plates and the FPC are combined into one (modularized) by bonding and fixing the plurality of piezoelectric plates at intervals to the bonding surface of the FPC on which a wiring pattern is formed and electrically connecting the electrodes of the piezoelectric plates and the wiring pattern of the FPC in an electrically conductive manner.

The plurality of piezoelectric plates are bonded and fixed to the FPC by being arranged at intervals such that polarized surfaces (positive electrode surfaces or negative electrode surfaces) thereof all face the same direction (upward or downward). This piezoelectric plate FPC module is built into the pipe of the sensor probe, and used as an ultrasonic wave transmission-and-reception system of the sensor probe.

For ease of description, in the following description, the "ultrasonic liquid level sensor probe" may be referred to simply as "sensor probe," and the "piezoelectric plate FPC module" may be referred to simply as "module" (the same applies in the Description of Embodiments and Claims sections). The modules used in the present invention include a single-sided-arranged module and a double-sided-arranged module depending on a bonding form between the piezoelectric plates and the FPC.

### [Single-sided-arranged Module]

The single-sided-arranged module has an FPC bonded and fixed to only one-side surfaces of two or more piezoelectric plates arranged at intervals with the polarized surfaces in alignment. The positive electrode surface and the negative electrode surface of each of the two or more piezoelectric plates bonded and fixed to the FPC are connected to the wiring pattern of the FPC in an electrically conductive manner. The positive extraction electrode extracted from the positive electrode surface of the piezoelectric plate and the negative extraction electrode surface extracted from the negative electrode surface can also be connected to the wiring pattern.

Aligning the polarization directions of the two or more piezoelectric plates, arranging the two or more piezoelectric plates at intervals, and connecting the positive electrode surfaces and negative electrode surfaces or the positive extraction electrodes and negative extraction electrode surfaces of the piezoelectric plates to the wiring pattern of the FPC in an electrically conductive manner are the same for the following modules.

### [Double-sided-arranged Module]

The double-sided-arranged module has FPCs bonded and fixed to both-side surfaces that are the positive electrode surface and the negative electrode surface, of each of two or more piezoelectric plates arranged at intervals with the polarized surfaces in alignment. The FPCs and the positive electrode surfaces and the negative electrode surfaces of the piezoelectric plates bonded and fixed to the FPCs are connected to the wiring patterns of the FPCs in an electrically conductive manner. In this case as well, the positive extraction electrodes or the negative extraction electrodes can also be connected to the wiring patterns of the FPCs in an electrically conductive manner. In general, methods of electrically connecting the positive electrode surface, the negative electrode, the positive extraction electrode, and the negative extraction electrode of the piezoelectric plate to the wiring pattern of the FPC include soldering and a method using a conductive bonding material. Connections using those methods are hereinafter referred to as "electrical connections."

### (Ultrasonic Liquid Level Sensor Probe)

The ultrasonic liquid level sensor probe according to the present invention includes an insertion portion to be inserted into a liquid inside a container and a connecting member that can be attached to the container. The insertion portion includes a double pipe provided with an outer pipe and an inner pipe, the inner pipe having an outer peripheral surface (ultrasonic wave transmission-and-reception surface) to which piezoelectric plate FPC modules (modules described above) on a wave-transmission side and a wave-reception side are bonded and fixed.

A bottom of a space (arrangement space) between the inner pipe and the outer pipe of the double pipe is closed by a bottom plate so as to prevent a liquid from entering the arrangement space, and the modules on the wave-transmission side and the wave-reception side that are installed in the arrangement space are isolated from the liquid. A space inside the inner pipe (entry space) has a bottom surface opened so that a liquid can enter and rise when the insertion portion is inserted into the liquid. The modules on the wave-transmission side and the wave-reception side may be in any one of a single-sided arrangement or a double-sided arrangement.

In the sensor probe according to the present invention, ultrasonic waves transmitted from the module on the wave-transmission side are transmitted through a peripheral wall (elastic plate) of the inner pipe to which the module is attached, propagate through the liquid inside the entry space, and are reflected by the peripheral wall (elastic plate) of the inner pipe on the opposite side, and the ultrasonic waves that have been reflected (reflected ultrasonic waves) are received by the module on the wave-reception side. Presence or absence or a liquid level of the liquid inside the entry space can be detected from an arrival time period or an intensity of the received reflected ultrasonic waves.

The module described above is of a separate wave transmitter-receiver type, in which a wave transmitter and a wave receiver are separately provided, but the module to be built into the double pipe may be a combination of a wave transmitter and a wave receiver (dual-purpose wave transmitting-and-receiving type: integrated wave transmitter-receiver type). In the latter case, ultrasonic waves transmitted from the module of the dual-purpose wave transmitting-and-receiving type are transmitted through the peripheral wall of the inner pipe, propagate through the liquid inside the entry space, and are reflected by the peripheral wall of the inner pipe on the opposite side, and the reflected ultrasonic waves are received by the module of the dual-purpose wave transmitting-and-receiving type. The presence or absence or the liquid level of the liquid inside the entry space can be detected from the arrival time period or the intensity of the reflected ultrasonic waves. The module to be employed in this case may also be in any one of the single-sided arrangement or the double-sided arrangement.

### Advantageous Effects of Invention

The sensor probe according to the present invention has the following effects.
(1) The two or more piezoelectric plates that are bonded and fixed to the FPC are collectively bonded and fixed to the outer periphery of the inner pipe of the double pipe, and hence it is not required to individually attach the two or more piezoelectric plates, thereby facilitating attachment work. In addition, there is no variation in attachment positions or attachment directions of the two or more piezoelectric plates, thereby enabling liquid level detection to be performed with high detection accuracy.
(2) It is not required to wire the lead wires (resin-coated wires) within the narrow arrangement space of the double pipe or to route the lead wires within the arrangement space, and hence the module can be easily attached.
(3) It is not required to secure a space for wiring the lead wires in the double pipe, and hence the double pipe can be made smaller and thinner.

### Brief Description of Drawings

FIGS. 1 are illustrations of an example of a single-sided-arranged module used in the present invention, in which FIG. 1(a) is a perspective view of a state in which piezoelectric plates are bonded and fixed to a bonding surface of an FPC, FIG. 1(b) is a perspective view of the FPC on a bonding surface (individual electrode surface) side, and FIG. 1(c) is a perspective view of the FPC on an outer surface (common electrode surface) side.
FIGS. 2 are illustrations of an example of a piezoelectric plate used in the present invention, in which FIG. 2(a) is a perspective view on a negative electrode surface side, and FIG. 2(b) is a perspective view on a positive electrode surface side.
FIGS. 3 are illustrations of an example of an electrically connected state of a module used in the present invention on the bonding surface side, in which FIG. 3(a) is a perspective view, and FIG. 3(b) is a cross-sectional view.
FIGS. 4 are illustrations of an example of a double-sided-arranged module used in the present invention, in which FIG. 4(a) is a perspective view on the bonding surface (individual electrode surface) side, and FIG. 4(b) is a perspective view on the outer surface (common electrode surface) side.
FIGS. 5 are illustrations of an example of an FPC for individual electrodes used in the double-sided-arranged module, in which FIG. 5(a) is a perspective view on the bonding surface side, and FIG. 5(b) is a perspective view on the outer surface side.
FIGS. 6 are illustrations of an example of an FPC for a common electrode used in the double-sided-arranged module, in which FIG. 6(a) is a perspective view on the bonding surface side, and FIG. 6(b) is a perspective view on the outer surface side.
FIG. 7(a) is an explanatory view of a state in which piezoelectric plates are bonded and fixed to the bonding surface of the FPC for the individual electrodes (FIG. 5(a)), and FIG. 7(b) is an explanatory view of an electrically connected state of a piezoelectric plate of FIG. 7(a).
FIG. 8 is a perspective view of an electrically connected state of the double-sided-arranged module.
FIG. 9(a) is an illustration of an example of a sensor probe according to the present invention and is an explanatory view of a case in which a dual-purpose wave transmitting-and-receiving module is arranged in a double pipe, and FIG. 9(b) is a plan view of FIG. 9(a).
FIG. 10 is an explanatory view of a state in which the sensor probe according to the present invention is inserted into a liquid in a container and set in the container.
FIG. 11(a), FIG. 11(b), and FIG. 11(c) are transverse sectional views of different related-art ultrasonic liquid level sensor probes.
FIG. 12 is an explanatory view of use of a related-art ultrasonic liquid level sensor probe.

### Description of Embodiments

Prior to the description of embodiments of the sensor probe according to the present invention, a piezoelectric plate FPC module to be built into a probe (insertion portion) of the sensor probe is described with reference to the accompanying drawings.

### (First Embodiment of Module: Single-sided-arranged Module)

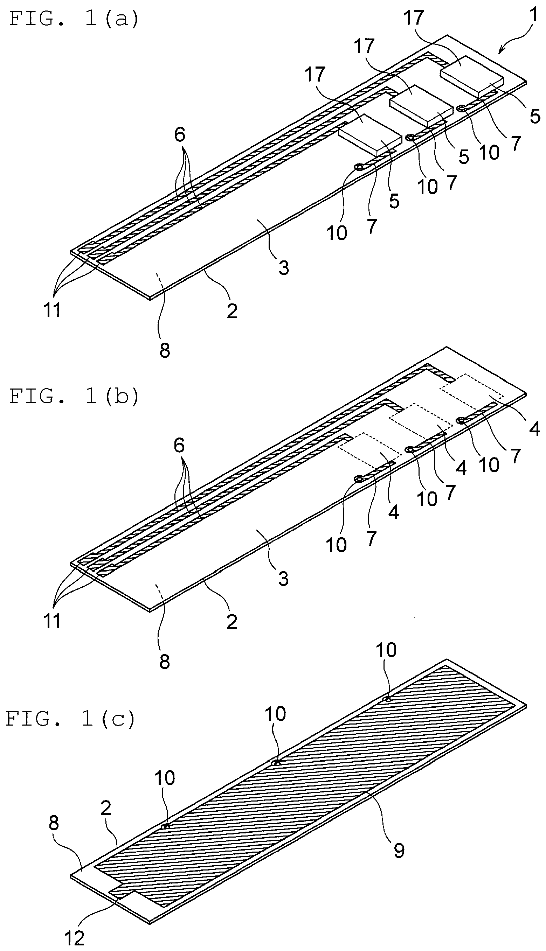

FIGS. 1 to FIGS. 3 are illustrations of examples of a single-sided-arranged module. In a module 1 thereof, three piezoelectric plates 5 are arranged on a bonding surface 3 of an FPC 2 at arrangement locations 4 (FIG. 1(b)) as in FIG. 1(a), and are bonded and fixed through use of a bonding material.

Bonding can be performed by applying the bonding material to the arrangement locations 4 of the FPC 2 or bonding surfaces (for example, negative electrode surfaces) of the piezoelectric plates 5 at a time of the bonding, but can be performed easily and quickly when the bonding material is applied to those locations in advance. When sizes, orientations, and the like of the arrangement locations 4 are indicated in advance on the bonding surface 3 of the FPC 2, it becomes easier to bond the piezoelectric plates 5, and variation in bonding positions (attachment positions) is less liable to occur, but the indication is not necessarily required.

### [FPC]

The FPC 2 of FIG. 1(a) has a plurality of individual conductors 6 and a plurality of connecting conductors 7 on the bonding surface 3 of a single FPC 2 as in FIG. 1(b), and has a wide common electrode 9 covering almost a whole area of a surface (outer surface) 8 opposite to the bonding surface 3 as in FIG. 1(c). The individual conductors 6, the connecting conductors 7, and the common electrode 9 are copper foil (pads). The connecting conductors 7 are connected to the common electrode 9 through intermediation of the copper foil (lands) of through-holes 10 in an electrically conductive manner. In the following description, the individual conductors 6 and the connecting conductors 7 may be referred to as "bonding surface wiring pattern," and the common electrode 9 may be referred to as "outer surface wiring pattern."

The number of arrangement locations 4 and the numbers of individual conductors 6 and connecting conductors 7 can be set in accordance with the number of piezoelectric plates 5 to be bonded and fixed to the FPC 2. At one end of each individual conductor 6 in a longitudinal direction, there is an individual external connection terminal 11 that is wider than each individual conductor 6. The individual conductors 6 and the connecting conductors 7 are located on outer sides of the arrangement locations 4 (on both outer sides of the FPC 2 in a lateral width direction). At one end of the common electrode 9 in a longitudinal direction, there is a common external connection terminal 12 that is narrower than the common electrode 9.

### [Piezoelectric Plate]

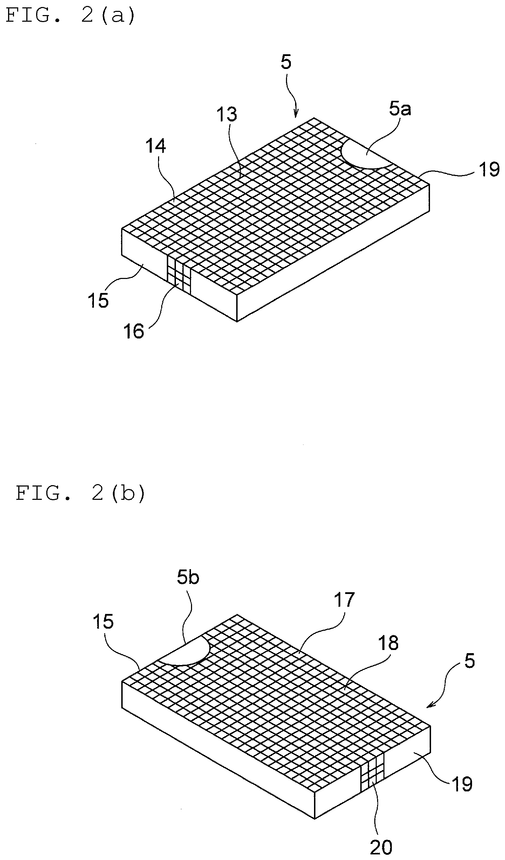

The piezoelectric plate 5 of FIG. 1(a) has a rectangular plate shape, but the piezoelectric plate 5 may have another form, for example, a disc shape or another shape. As in FIG. 2(a), one surface of the piezoelectric plate 5 in a thickness direction is a negative electrode surface 13 on which a negative electrode 14 is provided, and a negative extraction electrode 16 is extracted from the negative electrode 14 to one side surface 15 of the piezoelectric plate 5. Meanwhile, as in FIG. 2(b), a surface on the opposite side to the negative electrode surface 13 is a positive electrode surface 17 on which a positive electrode 18 is provided, and a positive extraction electrode 20 is extracted from the positive electrode 18 to another side surface 19 of the piezoelectric plate 5. The negative electrode surface 13 and the positive electrode surface 17 of the piezoelectric plate 5 are both planar (flat), and the negative electrode 14, the negative extraction electrode 16, the positive electrode 18, and the positive extraction electrode 20 are thin and planar with a uniform thickness. In FIG. 2(a), reference symbol 5a denotes a spot in which there is no negative electrode 14 (negative electrode blank portion), and in FIG. 2(b), reference symbol 5b denotes a spot in which there is no positive electrode 17 (positive electrode blank portion).

### [Bonding of FPC and Piezoelectric Plate]

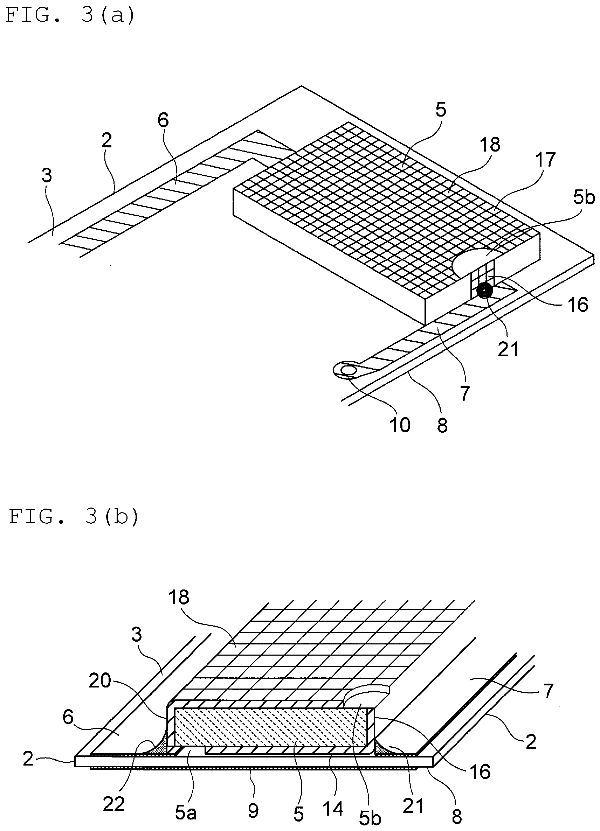

The three piezoelectric plates 5 of FIG. 1(a) are arranged at intervals in a longitudinal direction (axial direction) of the elongated FPC 2, and are bonded and fixed with the polarization directions in alignment. The phrase "bonding and fixing with the polarization directions in alignment" as used herein refers to performing the bonding and fixing such that the negative electrode surfaces 13 or the positive electrode surfaces 17 of all two or more piezoelectric plates 5 to be bonded and fixed to the FPC 2 are joined to the FPC 2 at the arrangement location 4 thereof. Each of the piezoelectric plates 5 of FIG. 1(a) is bonded and fixed to the FPC 2 at the arrangement location 4 (FIG. 1(b)) thereof, as in FIG. 3(a) and FIG. 3(b), with the negative electrode surface 13 of FIG. 2(a) joined thereto so as to face downward and the positive electrode surface 17 of FIG. 2(b) joined thereto so as to face upward.

As in FIG. 3(a), each individual piezoelectric plate 5 bonded and fixed to the FPC 2 has the negative extraction electrode 16 bonded and fixed (soldered) to the connecting conductor 7 of the FPC 2 by solder 21, to thereby achieve connection to the common electrode 9 (FIG. 3(b)) on the outer surface 8 of the FPC 2 through intermediation of the through-hole 10 of the FPC 2 in an electrically conductive manner. In addition, as in FIG. 3(b), the positive extraction electrode 20 of the piezoelectric plate 5 is bonded and fixed (soldered) to the individual conductor 6 of the FPC 2 by solder 22.

As in FIG. 3(a) and FIG. 3(b), the connecting conductor 7 serves to connect the negative extraction electrode 16 of the piezoelectric plate 5 to the through-hole 10 in an electrically conductive manner by being bonded and fixed (soldered) to the negative extraction electrode 16 in an electrically conductive manner. Therefore, when the negative extraction electrode 16 can be soldered directly to the through-hole 10, the connecting conductor 7 may not be required.

In the single-sided arrangement module, any one of the negative electrode 14 or the negative extraction electrode 16 (FIG. 2(a)) or the positive electrode surface 17 or the positive electrode 18 (FIG. 2(b)) of the piezoelectric plate 5 may be electrically connected to the common electrode 9 (FIG. 1(c)) of the FPC 2, but when the negative electrode 14 or the negative extraction electrode 16 is electrically connected to the common electrode 9, the outer surface 8 on which the common electrode 9 of the FPC 2 is formed can be used as an ultrasonic wave emitting surface, thereby facilitating handling of the module 1. This connection is the same for the following modules.

### [Thinning of Joint Surface]

It is possible to make a joint surface between the bonding surface between the FPC 2 and the piezoelectric plate 5 thinner by planarizing the negative electrode surface 13, the negative electrode 14 (FIG. 2(a)), the positive electrode surface 17, and the positive electrode 18 (FIG. 2(b)) of the piezoelectric plate 5 to be bonded and fixed to the FPC 2.

The individual conductors 6 and the connecting conductors 7 of the FPC 2 are not formed at the arrangement locations 4 of the FPC 2, but are formed on the outer sides of the arrangement locations 4 (on both end sides of the FPC 2 in the lateral width direction) as in FIG. 1(a), thereby causing a bonding material layer between the arrangement locations 4 of the FPC 2 and the piezoelectric plates 5 to become thinner and flat with a uniform thickness and eliminating irregularities. Further, no gap is formed between the arrangement locations 4 of the FPC 2 and the piezoelectric plates 5, and air bubbles are less liable to be formed, thereby enabling the module 1 to become thinner and enabling reduction to be achieved in variation in bonding positions and bonding directions of the piezoelectric plates 5 relative to the FPC 2. This reduces variation in bonding position and bonding direction of the module built into a double pipe, resulting in improved liquid level detection accuracy.

The negative extraction electrode 16 and the positive extraction electrode 20 are extracted to opposed side surfaces of each piezoelectric plate 5 as in FIG. 2(a) and FIG. 2(b), and the individual conductors 6 and the connecting conductors 7 are arranged immediately adjacent to the outer sides of the negative extraction electrodes 16 and the positive extraction electrodes 20 as in FIG. 1(a) and FIG. 1(b), thereby facilitating soldering between the negative extraction electrodes 16 and the connecting conductors 7 and between the positive extraction electrodes 20 and the individual conductors 6, enabling reduction in amount of solder, and enabling the module 1 to become smaller and thinner.

### (Second Embodiment of Module: Double-sided-arranged Module)

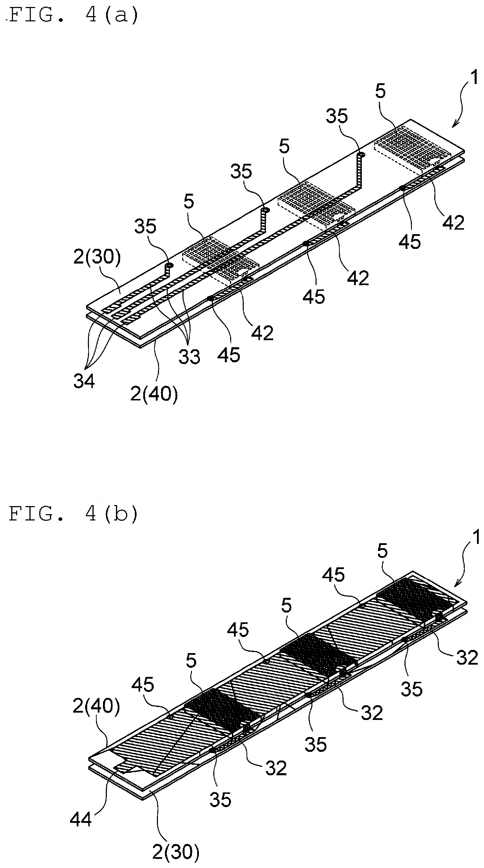

The module 1 of FIG. 4(a) and FIG. 4(b) is an example of a double-sided-arranged module. FPCs 2 are bonded and fixed to respective surfaces of the negative electrode surfaces 13 and the positive electrode surfaces 17 of the three piezoelectric plates 5 such that the piezoelectric plates 5 are sandwiched from both sides thereof in the thickness direction.

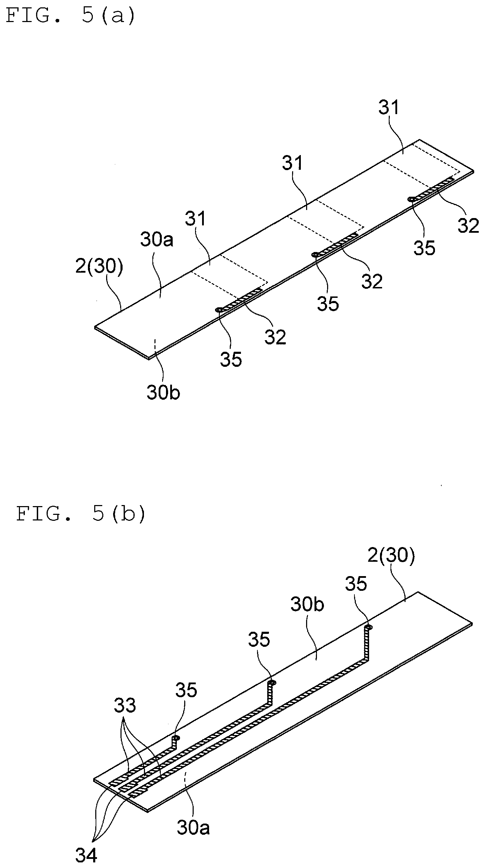

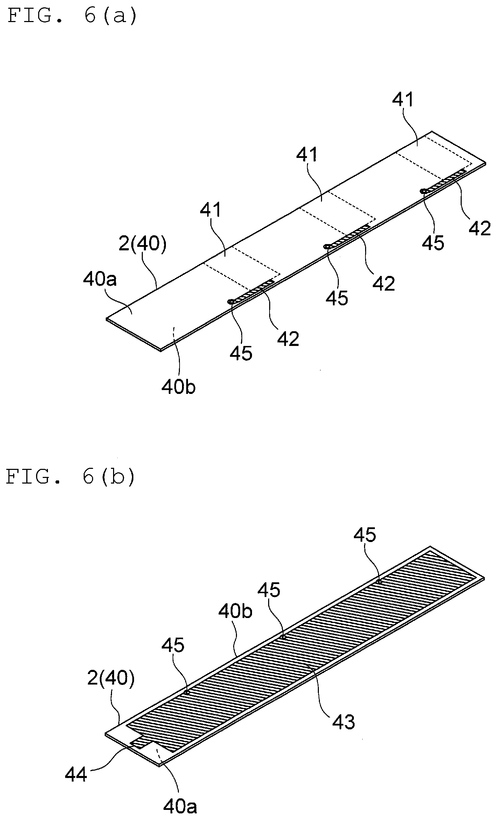

In FIG. 4(a) and FIG. 4(b), an FPC 30 for individual electrodes (FIG. 5(a) and FIG. 5(b)) is used as one of the FPCs, an FPC 40 for a common electrode (FIG. 6(a) and FIG. 6(b)) is used as the other one of the FPCs, and the three piezoelectric plates 5 are bonded and fixed at intervals in longitudinal directions of both the FPCs 30 and 40 with the polarization directions in alignment.

### [FPC for Individual Electrodes]

As in FIG. 5(a) and FIG. 5(b), the FPC 30 for the individual electrodes has three arrangement locations 31 and three connecting conductors 32 formed on a bonding surface 30a to be bonded and fixed to the piezoelectric plate 5, and has three individual conductors 33 formed on a surface (outer surface) 30b opposite to the bonding surface 30a. An individual external connection terminal 34 is formed at one end of each the individual conductors 33 in a longitudinal direction. Each individual external connection terminal 34 is formed to be wider than the individual conductors 33 so as to facilitate soldering.

The connecting conductors 32, the individual conductors 33, and the individual external connection terminals 34 are copper foil (pads), and are thin and planar with a uniform thickness. The connecting conductors 32 on the bonding surface 30a and the individual conductors 33 on the outer surface 30b are connected through intermediation of through-holes 35 of the FPC 30 for the individual electrodes. The numbers of connecting conductors 32 and individual conductors 33 are set to the same number (three) as the number of piezoelectric plates 5 (three in FIG. 4(a) and FIG. 4(b)), but can be set to any other number that is the same as the number of piezoelectric plates 5 to be bonded and fixed to the FPC 30 for the individual electrodes. The arrangement locations 31 (FIG. 5(a)) may or may not be displayed on the FPC 30 for the individual electrodes. Such a configuration is the same in the following description. In the following description, the connecting conductors 32 may be referred to as "bonding surface wiring pattern," and the individual conductors 33 may be referred to as "outer surface wiring pattern."

### [FPC for Common Electrode]

The FPC 40 for the common electrode (FIG. 6(a) and FIG. 6(b)) has three arrangement locations 41 and three connecting conductors 42 formed on a bonding surface 40a to be bonded and fixed to the piezoelectric plate 5, and a common electrode 43 is formed on a surface (outer surface) 40b opposite to the bonding surface 40a. The common electrode 43 is wide enough to be provided over almost a whole area of the outer surface 40b in a width direction. At one end of the common electrode 43 in a longitudinal direction, there is a common external connection terminal 44 that is narrower than the common electrode 43. The common electrode 43 is connected to the connecting conductor 42 through intermediation of through-holes 45 of the FPC 40 for the common electrode. In the following description, the connecting conductor 42 may be referred to as "bonding surface wiring pattern," and the common electrode 43 may be referred to as "outer surface wiring pattern."

### [Piezoelectric Plate]

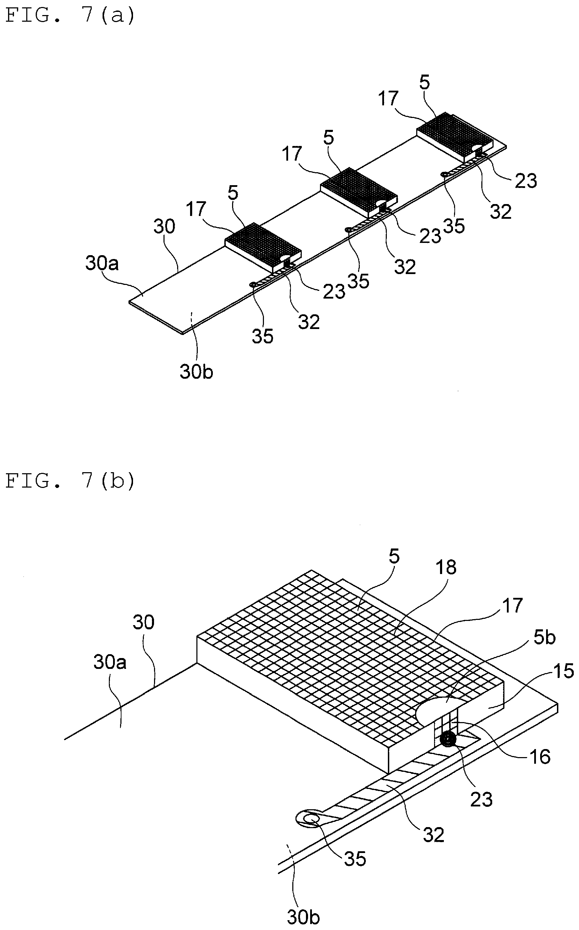

Various forms of piezoelectric plates 5 can also be used for the module 1 in the second embodiment. For example, those illustrated in FIG. 4(a), FIG. 4(b), FIG. 7(a), and FIG. 7(b) are the same as the piezoelectric plates 5 of FIG. 2(a) and FIG. 2(b).

### [Bonding and Fixing of FPCs and Piezoelectric Plate]

There are various methods of attaching the piezoelectric plate 5 to the FPC 30 for the individual electrodes and the FPC 40 for the common electrode, examples of which include the following method for the attachment.

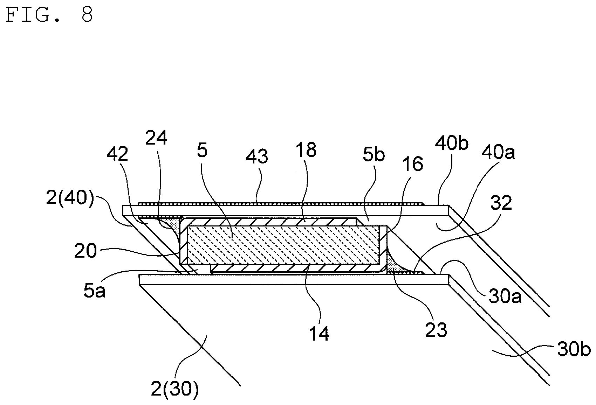

As in FIG. 7(a) and FIG. 7(b), the three piezoelectric plates 5 are bonded and fixed to the bonding surface 30a of the FPC 30 for the individual electrodes at the arrangement locations 31 (FIG. 5(a)). In this case, as in FIG. 8, the negative electrode 14 (FIG. 2(a)) of the piezoelectric plate 5 is bonded and fixed to the bonding surface 30a of the FPC 30 for the individual electrodes so as to face downward, and the negative extraction electrode 16 (FIG. 2(a)) extracted from the negative electrode 14 is bonded and fixed (soldered) to the connecting conductor 32 of the FPC 30 for the individual electrodes by solder 23. The bonding and fixing can be performed through use of a conductive bonding material in place of the solder, or can be performed by another method. Through such bonding and fixing, the negative extraction electrodes 16 and the connecting conductors 32 are connected to the individual conductors 33 (FIG. 5(b)) on the outer surface 30b of the FPC 30 for the individual electrodes through intermediation of the through-holes 35 (FIG. 7(a) and FIG. 7(b)) of the FPC 30 for the individual electrodes.

In addition, the bonding surface 40a (FIG. 6(a)) of the FPC 40 for the common electrode is bonded and fixed to upper surfaces of the positive electrodes 18 of the three piezoelectric plates 5, which have been bonded and fixed to the FPC 30 for the individual electrodes as in FIG. 7(a) and FIG. 7(b), so as to cover the upper surfaces as in FIG. 8. Further, the positive extraction electrode 20 extracted from the positive electrode 18 of each individual piezoelectric plate 5 as in FIG. 2(b) is bonded and fixed to the connecting conductor 42 (FIG. 6(a)) of the FPC 40 for the common electrode by solder, a conductive bonding material, or the like as in FIG. 8. Through such bonding and fixing, the positive extraction electrodes 20 and the connecting conductors 42 are connected to the common electrodes 43 (FIG. 6(b)) on the outer surface 40b of the FPC 40 for the common electrode through intermediation of the through-holes 45 (FIG. 6(a) and FIG. 6(b)) of the FPC 40 for the common electrode.

### [Widths of FPCs]

The width of the FPC 30 for the individual electrodes (FIG. 5(a)), indication locations of the connecting conductors 32, the width of the FPC 40 for the common electrode (FIG. 6(a)), and indication locations of the connecting conductors 42 are appropriately designed so as to prevent soldering from being hindered, in order to enable the connecting conductors 32 of the FPC 30 for the individual electrodes and the negative extraction electrodes 16 of the piezoelectric plates 5 to be soldered and the connecting conductors 42 of the FPC 40 for the common electrode and the positive extraction electrodes 20 of the piezoelectric plates 5 to be soldered with the both-side surfaces of the piezoelectric plate 5 being sandwiched as in FIG. 8.

### (First Embodiment of Ultrasonic Liquid Level Sensor Probe)

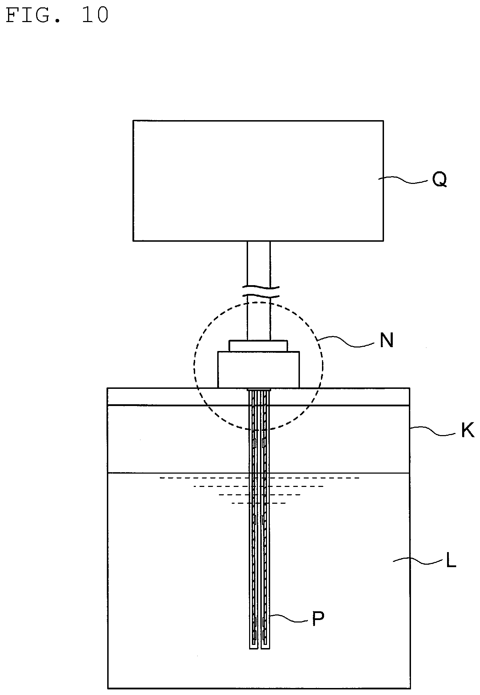

As in FIG. 10, the sensor probe according to the present invention is formed of: the above-mentioned module built into an insertion portion P to be inserted into a liquid L in a container K; and a connecting member N attached above the insertion portion P.

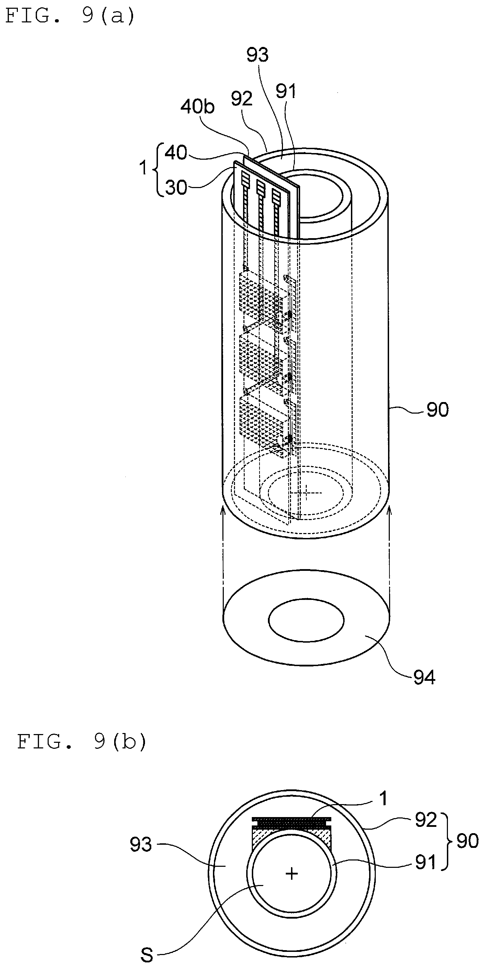

An example of embodiments of an ultrasonic liquid level sensor probe according to the present invention is described with reference to FIGS. 9. In FIGS. 9, as a case of the insertion portion P, a double pipe 90 in which an inner pipe 91 and an outer pipe 92 face each other across a space (arrangement space) 93 is used, and a piezoelectric plate FPC module 1 is bonded and fixed to an outer peripheral surface of the inner pipe 91. This piezoelectric plate FPC module 1 is of a separate wave transmitter-receiver type.

The module 1 to be built into the double pipe 90 may be any one of the single-sided-arranged module or the double-sided-arranged module described above. In FIGS. 9, the double-sided-arranged module 1 is built into the double pipe 90.

In FIGS. 9, the double-sided-arranged module 1 is bonded and fixed to the double pipe 90 in a longitudinal direction (vertical direction) thereof, and the piezoelectric plates 5 of the double-sided-arranged module 1 are arranged in a lengthwise direction. The double-sided-arranged module 1 has upper end portions of the FPC 30 for the individual electrodes and the FPC 40 for the common electrode protruding above the double pipe 90.

In FIGS. 9, the space between the inner pipe 91 and the outer pipe 92 is the arrangement space 93 in which the double-sided-arranged module 1 can be arranged, and a space S on an inner side of the inner pipe 91 serves as an entry space S in which the liquid L enters and rises when the double pipe 90 is inserted into the liquid L inside the container K. A bottom surface of the arrangement space 93 is closed by a bottom plate 94 to prevent a liquid from entering the arrangement space 93, thereby isolating and protecting the double-sided-arranged module 1 arranged in the arrangement space 93 from the liquid.

The connecting member N is attached to the double pipe 90 as in FIG. 10. The connecting member N is a connector, a socket, an adapter, or the like that can be connected to external equipment, and is provided with electrodes (not shown) internally. The internal electrodes of the connecting member N are electrically connected to the individual external connection terminals 34 (FIG. 4(a)) of the FPC 30 for the individual electrodes and the common external connection terminal 44 (FIG. 4(b)) of the FPC 40 for the common electrode of the double-sided-arranged module 1 caused to protrude above the double pipe 90. The attachment of the connecting member N and the electrical connection of the internal electrodes of the connecting member N to the external connection terminals of the FPC 2 of the module 1 are the same for the following sensor probes.

### [Double Pipe]

The double pipe 90 may be any member that enables the module 1 to be stored and arranged therein and bonded and fixed thereto, and no limitation is imposed on a shape, a structure, a material, a molding method, and the like of the member, but the member may be made of chemical-resistant and heat-resistant resin, metal, glass, or the like depending on characteristics of an insertion destination liquid. Sizes, such as thicknesses (inner diameters and outer diameters) and lengths, shapes, and the like of the inner pipe 91 and the outer pipe 92 can be appropriately designed so as to facilitate insertion into the liquid and measurement of a liquid level. The same applies to the following embodiments.

### [Usage Method]

To use the sensor probe of FIGS. 9, as in FIG. 10, the double pipe 90 is inserted into the liquid L inside the container K. The liquid L inside the container K enters and rises in the entry space S of the inserted double pipe 90. As in FIG. 10, the connecting member N is fixed to the container K, and external equipment Q required for liquid level detection, for example, a control panel or a computer, is electrically connected to the connecting member N.

When a drive voltage is applied to the piezoelectric plates (wave transmitters) of the module 1 on a wave-traveling side to emit ultrasonic waves (intermittent waves: burst waves) from the wave transmitters, the ultrasonic waves are transmitted through a peripheral wall (elastic plate) of the inner pipe 91 to which the module 1 is bonded and fixed, propagate through the liquid L inside the entry space S serving as a medium, and are received and reflected by a peripheral wall (elastic plate) of the inner pipe 91 on the opposite side. The reflected ultrasonic waves are received by the piezoelectric plates (wave receivers) of the module 1 on a wave-reception side. Presence or absence of the liquid is detected based on a time period until wave reception or an intensity of the received waves. The two or more piezoelectric plates 5 of the module 1 built into the double pipe 90 to be inserted into the liquid are arranged at intervals vertically in an insertion direction of the probe as in FIG. 12. Therefore, it is possible to examine detection voltages of the respective piezoelectric plates 5 by applying the drive voltage to the wave transmitters by sequentially switching from a lower wave transmitter to a higher wave transmitter in the insertion direction or conversely by sequentially switching from the higher wave transmitter to the lower wave transmitter in the insertion direction, and to detect the liquid level inside the container from a position of the wave receiver that has detected the strongest level.

### [Drive Voltage]

The drive voltage to be applied to the piezoelectric plate 5 of the module 1 on the wave-transmission side is set to be the same as a drive voltage to be applied to a related-art piezoelectric plate. In this case, it is desired that the voltage to be applied be always in a positive direction with respect to the polarization direction of the piezoelectric plate 5 and a reverse voltage not be applied, and that polarization be performed by periodically applying a positive electric field to activate the piezoelectric plate 5. This method of applying the drive voltage and the above-mentioned usage method are also the same in driving the sensor probe described below.

### (Second Embodiment of Ultrasonic Liquid Level Sensor Probe)

The sensor probe according to the present invention may be one in which the double-sided-arranged module 1 of the sensor probe in the first embodiment (FIGS. 9) is replaced by the single-sided-arranged module. The rest of a configuration thereof, a usage example thereof, and an operation during use thereof are the same as those in the first embodiment (FIGS. 9).

### (Third Embodiment of Ultrasonic Liquid Level Sensor Probe)

The module 1 of a dual-purpose wave transmitting-and-receiving type (integrated wave transmitter-receiver type) in which the wave-traveling side and the wave-reception side are integrated can also be built into the sensor probe according to the present invention. The operation for this case is as follows.

When a drive voltage is applied to the module 1 of the dual-purpose wave transmitting-and-receiving type to emit ultrasonic waves (intermittent waves: burst waves) from the wave transmitters of the module 1, the ultrasonic waves are transmitted through a peripheral wall (elastic plate) of the inner pipe 91, propagate through the liquid L inside the entry space S serving as a medium, and are received and reflected by a peripheral wall (elastic plate) of the inner pipe 91 on the opposite side. The reflected ultrasonic waves are received by the wave receivers of the module 1 of the dual-purpose wave transmitting-and-receiving type, and presence or absence of the liquid is detected based on a time period until wave reception or an intensity of the received waves. Also in this case, in the module 1 built into the double pipe 90, the two or more piezoelectric plates 5 are arranged at intervals vertically in an insertion direction as in FIG. 12. Therefore, it is possible to examine detection voltages of the respective piezoelectric plates 5 by applying the drive voltage to the wave transmitters by sequentially switching from a lower wave transmitter to a higher wave transmitter in the insertion direction or conversely by sequentially switching from the higher wave transmitter to the lower wave transmitter in the insertion direction, and to detect the liquid level inside the container from a position of the wave receiver that has detected the strongest level.

### Industrial Applicability

The above-mentioned embodiments are merely examples. The designs of those embodiments can be modified as long as the problem can be solved. For example, the case of the sensor probe in the above-mentioned embodiments may be a double square pipe, or a double pipe having any other shape or structure.

### Reference Signs List

- 1: piezoelectric plate FPC module (module/single-sided-arrangement module/double-sided-arrangement module)
- 2: FPC
- 3: bonding surface (of FPC)
- 4: arrangement location
- 5: piezoelectric plate (of FPC)
- 5a: negative electrode blank portion (of piezoelectric plate)
- 5b: positive electrode blank portion (of piezoelectric plate)
- 6: individual conductor
- 7: connecting conductor
- 8: outer surface (of FPC)
- 9: common electrode (of FPC)
- 10: through-hole (of FPC)
- 11: individual external connection terminal (of FPC)
- 12: common external connection terminal (of FPC)
- 13: negative electrode surface (of piezoelectric plate)
- 14: negative electrode (of piezoelectric plate)
- 15: one side surface (of piezoelectric plate)
- 16: negative extraction electrode (of piezoelectric plate)
- 17: positive electrode surface (of piezoelectric plate)
- 18: positive electrode (of piezoelectric plate)
- 19: another side surface (of piezoelectric plate)
- 20: positive extraction electrode (of piezoelectric plate)
- 21: solder (or conductive bonding material)
- 22: solder (or conductive bonding material)
- 23: solder (or conductive bonding material)
- 24: solder (or conductive bonding material)
- 30: FPC for individual electrode
- 30a: bonding surface (of FPC for individual electrode)
- 30b: outer surface (of FPC for individual electrode)
- 31: arrangement location (of FPC for individual electrode)
- 32: connecting conductor (of FPC for individual electrode)
- 33: individual conductor (of FPC for individual electrode)
- 34: individual external connection terminal
- 35: through-hole (of FPC for individual electrode)
- 40: FPC for common electrode
- 40a: bonding surface (of FPC for common electrode)
- 40b: outer surface (of FPC for common electrode)
- 41: arrangement location (of FPC for common electrode)
- 42: connecting conductor (of FPC for common electrode)
- 43: common electrode (of FPC for common electrode)
- 44: common external connection terminal
- 45: through-hole (of FPC for common electrode)
- 90: double pipe
- 91: inner pipe
- 92: outer pipe
- 93: space (arrangement space)
- 94: bottom plate (of double pipe)
- A: piezoelectric plate for wave transmission (wave transmitter)
- B: piezoelectric plate for wave reception (wave receiver)
- C: pipe (double pipe)
- D: inner pipe
- E: outer pipe
- F: space (arrangement space)
- G: lead wire
- J: space (entry space)
- K: container
- L: liquid
- N: connecting member
- P: insertion portion (probe)
- Q: external equipment
- R: bottom plate
- S: space (entry space)
- Z: dual-purpose wave transmitting-and-receiving piezoelectric plate (wave transmitter-receiver)

## Claims

1. An ultrasonic liquid level sensor probe, comprising:
an insertion portion to be inserted into a liquid inside a container; and
a connecting member attachable to the container,
wherein the insertion portion has piezoelectric plate FPC modules on a wave-transmission side and a wave-reception side attached to an outer peripheral surface of an inner pipe of a double pipe in which an outer pipe and the inner pipe face each other across an arrangement space,
wherein the arrangement space of the double pipe is closed so as to prevent entry of the liquid, thereby isolating the piezoelectric plate FPC modules on the wave-transmission side and the wave-reception side that are attached in the arrangement space from the liquid,
wherein the inner pipe has an inner side serving as an entry space in which the liquid enters and rises when the insertion portion is inserted into the liquid,
wherein the piezoelectric plate FPC modules on the wave-transmission side and the wave-reception side are each in a single-sided arrangement, in which an FPC is bonded to one-side surfaces of two or more piezoelectric plates arranged at intervals,
wherein each individual piezoelectric plate has a plate shape with one surface in a thickness direction being a positive electrode surface and an opposite-side surface being a negative electrode surface, the positive electrode surface being provided with a positive electrode, the negative electrode surface being provided with a negative electrode,
wherein the FPC has one surface serving as a bonding surface to be bonded to the piezoelectric plates, and has an opposite-side surface serving as an outer surface, the bonding surface being provided with a bonding surface wiring pattern, the outer surface being provided with an outer surface wiring pattern,
wherein each of the two or more piezoelectric plates has any one electrode surface of the positive electrode surface or the negative electrode surface bonded to the bonding surface of the FPC,
wherein any one electrode of the positive electrode or the negative electrode, or any one extraction electrode of a positive extraction electrode extracted from the positive electrode to one side surface of opposed side surfaces of the piezoelectric plate or a negative extraction electrode extracted from the negative electrode to another side surface, is connected to the bonding surface wiring pattern of the FPC in an electrically conductive manner,
wherein another electrode of the positive electrode or the negative electrode, or another extraction electrode of the positive extraction electrode extracted from the positive electrode to the one side surface of the opposed side surfaces of the piezoelectric plate or the negative extraction electrode extracted from the negative electrode to the another side surface, is connected to the outer surface wiring pattern of the FPC in an electrically conductive manner,
wherein the piezoelectric plate FPC modules on the wave-transmission side and the wave-reception side that are fixed to the outer peripheral surface of the inner pipe of the double pipe are fixed in such orientations that ultrasonic waves emitted from the piezoelectric plate FPC module on the wave-transmission side propagate through the entry space to be received by the piezoelectric plate FPC module on the wave-reception side, and
wherein the connecting member is attached to the double pipe, and is electrically connected to the FPCs of the piezoelectric plate FPC module on the wave-transmission side and the piezoelectric plate FPC module on the wave-reception side.

2. The ultrasonic liquid level sensor probe according to claim 1, wherein the piezoelectric plate FPC module on the wave-transmission side and the piezoelectric plate FPC module on the wave-reception side are of a separate wave transmitter-receiver type, in which a wave transmitter and a wave receiver are separate, or an integrated wave transmitter-receiver type, in which a wave transmitter and a wave receiver are combined.

3. The ultrasonic liquid level sensor probe according to claim 1 or 2,
wherein the bonding surface wiring pattern of the FPC includes individual conductors, connecting conductors, and individual external connection terminals that are continuous with the individual conductors,
wherein the outer surface wiring pattern of the FPC includes a common electrode that is common to all the piezoelectric plates arranged on and fixed to the FPC and a common external connection terminal that is continuous with the common electrode, and
wherein the individual conductors are each connected to any one electrode of the positive electrode or the negative electrode of each of the two or more piezoelectric plates bonded to the bonding surface of the FPC or to any one extraction electrode of the positive extraction electrode or the negative extraction electrode, the connecting conductors are each connected to another electrode or another extraction electrode, and the connecting conductors are connected to the common electrode of the FPC through intermediation of through-holes of the FPC in an electrically conductive manner.

4. An ultrasonic liquid level sensor probe, comprising:
an insertion portion to be inserted into a liquid inside a container; and
a connecting member attachable to the container,
wherein the insertion portion has piezoelectric plate FPC modules on a wave-transmission side and a wave-reception side attached to an outer peripheral surface of an inner pipe of a double pipe in which an outer pipe and the inner pipe face each other across an arrangement space,
wherein the arrangement space of the double pipe is closed so as to prevent entry of the liquid, thereby isolating the piezoelectric plate FPC modules on the wave-transmission side and the wave-reception side that are attached in the arrangement space from the liquid,
wherein the inner pipe has an inner side serving as an entry space in which the liquid enters and rises when the insertion portion is inserted into the liquid,
wherein the piezoelectric plate FPC modules on the wave-transmission side and the wave-reception side are each in a double-sided arrangement, in which FPCs are bonded to both-side surfaces that are a positive electrode surface and a negative electrode surface of each of two or more piezoelectric plates arranged at intervals,
wherein each individual piezoelectric plate has a plate shape with one surface in a thickness direction being the positive electrode surface and an opposite-side surface being the negative electrode surface, the positive electrode surface being provided with a positive electrode, the negative electrode surface being provided with a negative electrode,
wherein one of the FPCs is an FPC for individual electrodes, and another of the FPCs is an FPC for a common electrode,
wherein the FPC for the individual electrodes has one surface serving as a bonding surface to be bonded to the piezoelectric plates, and has an opposite-side surface serving as an outer surface, the bonding surface being provided with a bonding surface wiring pattern, the outer surface being provided with an outer surface wiring pattern,
wherein the FPC for the common electrode has one surface serving as a bonding surface to be bonded to the piezoelectric plates, and has an opposite-side surface serving as an outer surface, the bonding surface being provided with a bonding surface wiring pattern, the outer surface being provided with an outer surface wiring pattern,
wherein the positive electrode of each individual piezoelectric plate, or a positive extraction electrode extracted from the positive electrode to one side surface of opposed side surfaces of the piezoelectric plate, is connected to the bonding surface wiring pattern of the FPC for the individual electrodes, and the bonding surface wiring pattern is connected to the outer surface wiring pattern of the FPC for the individual electrodes through intermediation of through-holes in an electrically conductive manner,
wherein the negative electrode of each individual piezoelectric plate, or a negative extraction electrode extracted from the negative electrode to another side surface of the piezoelectric plate, is connected to the bonding surface wiring pattern of the FPC for the common electrode, and the bonding surface wiring pattern is connected to the outer surface wiring pattern of the FPC for the common electrode through intermediation of through-holes in an electrically conductive manner,
wherein the piezoelectric plate FPC modules on the wave-transmission side and the wave-reception side that are fixed to the outer peripheral surface of the inner pipe of the double pipe are fixed in such orientations that ultrasonic waves emitted from the piezoelectric plate FPC module on the wave-transmission side propagate through the entry space to be received by the piezoelectric plate FPC module on the wave-reception side, and
wherein the connecting member is attached to the double pipe, and is electrically connected to the FPCs of the piezoelectric plate FPC module on the wave-transmission side and the piezoelectric plate FPC module on the wave-reception side.

5. The ultrasonic liquid level sensor probe according to claim 4, wherein the piezoelectric plate FPC module on the wave-transmission side and the piezoelectric plate FPC module on the wave-reception side are of a separate wave transmitter-receiver type, in which a wave transmitter and a wave receiver are separate, or an integrated wave transmitter-receiver type, in which a wave transmitter and a wave receiver are combined.

6. The ultrasonic liquid level sensor probe according to claim 4 or 5,
wherein the bonding surface wiring pattern of the FPC for the individual electrodes includes connecting conductors, and the outer surface wiring pattern includes individual conductors and individual external connection terminals that are continuous with the individual conductors,
wherein the bonding surface wiring pattern of the FPC for the common electrode includes connecting conductors, and the outer surface wiring pattern includes a common electrode that is common to all the piezoelectric plates arranged on and fixed to the FPC and a common external connection terminal that is continuous with the common electrode,
wherein the connecting conductors of the FPC for the individual electrodes are each connected to the positive electrode or the positive extraction electrode of each of the two or more piezoelectric plates bonded to the bonding surface of the FPC for the individual electrodes, and the connecting conductors are connected to the individual conductors of the FPC for the individual electrodes through intermediation of through-holes of the FPC for the individual electrodes in an electrically conductive manner, and
wherein the connecting conductors of the FPC for the common electrode are each connected to the negative electrode or the negative extraction electrode of each of the two or more piezoelectric plates bonded to the bonding surface of the FPC for the common electrode, and the connecting conductors are connected to the common electrode of the FPC for the common electrode through intermediation of through-holes of the FPC for the common electrode in an electrically conductive manner.
